## Europäisches Patentamt

## European Patent Office

## Office européen des brevets

(11) Veröffentlichungsnummer: **0 056 083 B1**

(12) **EUROPÄISCHE PATENTSCHRIFT**

(45) Veröffentlichungstag der Patentschrift:
16.05.84

(21) Anmeldenummer: 81108100.9

(22) Anmeldetag: 09.10.81

(51) Int. Cl.³: **C 02 F 3/04**

(54) **Füllung für Tropfkörper für die biologische Abwasserreinigung.**

(30) Priorität: **19.12.80 DE 3047967**

(43) Veröffentlichungstag der Anmeldung:
**21.07.82 Patentblatt 82/29**

(45) Bekanntmachung des Hinweises auf die Patenterteilung:
**16.05.84 Patentblatt 84/20**

(84) Benannte Vertragsstaaten:
**AT BE CH FR GB IT LI NL**

(56) Entgegenhaltungen:
**DE - A - 2 301 076**
**DE - C - 1 759 102**

(73) Patentinhaber: **Felix Schoeller jr. GmbH & Co KG, Burg Gretesch, D-4500 Osnabrück (DE)**

(72) Erfinder: **Spelsberg, Hans-Hugo,**
**Lothar-Schoeller-Strasse 8, D-4500 Osnabrück (DE)**

(74) Vertreter: **Rücker, Wolfgang, Dipl.-Chem.,**
**Hubertusstrasse 2, D-3000 Hannover 1 (DE)**

BUNDESDRUCKEREI BERLIN

Füllung für Tropfkörper für die biologische Abwasserreinigung

Die Erfindung betrifft eine Füllung für Tropfkörper für die biologische Abwasserreinigung in hängender Anordnung.

Es ist bekannt, Tropfkörper herzustellen, die mit den verschiedensten brockenförmigen Materialien gefüllt sind. Dabei können die brockenförmige Materialien, die die Füllung bilden z. B. Lavaschlacke oder sehr unterschiedlich geformte Kunststoffelemente sein. Nachteil solcher Tropfkörper sind die große Verstopfungsgefahr. Deshalb sind Tropfkörper mit röhrenförmigen oder wabenförmigen Strukturen entwickelt worden, die kürzere Durchlaufzeiten mit einer geringen Verstopfungsgefahr verbinden. Auch solche Tropfkörper sind jedoch nicht ohne Problematik.

Bei röhrenförmigen Konstruktionen können Wassertropfen frei durchfallen, und bei den wabenförmigen Plattenkonstruktionen bereitet die Anbringung im Tropfkörper Schwierigkeiten, weil die Pakete wegen ihrer geringen Beanspruchbarkeit in mehreren Schichten durch gesonderte Tragkonstruktionen gestützt werden müssen. Sofern die Schichten nicht gesondert gestützt, sondern die Pakete aufeinander gestapelt werden, ist an den Berührungsstellen eine erhöhte Verstopfungsgefahr gegeben. Außerdem erfordert ein Austausch schadhafter Teile einen hohen Arbeitsaufwand.

Es ist ferner bekannt, Tropfkörper aus langen hängend angebrachten Folienbahnen aus Kunststoff herzustellen. Solche Folienbahnen können gemäß DE-C3 1 759 102 zur Steigerung des Wirkungsgrades wellenförmig oder zickzackförmig verformte Teilflächen haben. Durch gegenläufige Anordnung der Verformungen bei jeweils benachbarten Folienbahnen ergibt sich ein Netz von Berührungspunkten, wodurch nicht nur ein freier Durchfall von Wassertropfen und ein großflächiges Aneinanderkleben der Bahnen verhindert sondern auch die laminare Strömung des an den Folienflächen herabrinnenden Wassers immer wieder gebrochen wird. Solche hängenden Füllungen sind nahezu verstopfungsfrei.

Nachteilig an Tropfkörpern mit hängenden Folienbahnen ist aber die trotz der vielseitigen Ausformungsmöglichkeiten begrenzte wirksame Oberfläche pro Volumeneinheit, die bei marktüblichen Konstruktionen zwischen 100 und 500 m²/m³ liegt.

Nachteilig an allen bisher bekannten Tropfkörperfüllungen ist ferner ihre fehlende Variabilität. Jede Füllungsart hat eine bestimmte wirksame Oberfläche. Die zu reinigenden Abwässer sind dagegen bezüglich Art und Menge des Nährstoffgehaltes unterschiedlich. Deshalb ist das verfügbare Tropfkörpervolumen wegen der starren geometrischen Formen der Füllungsmaterialien in vielen Fällen nicht optimal genutzt.

Aufgabe der Erfindung ist es demgegenüber, eine Füllung für Tropfkörper zu schaffen, die keinen der erwähnten Nachteile hat, keine Tendenz zur Verstopfung aufweist, konstengünstig herzustellen ist, einen geringen Wartungsaufwand erfordert und insbesondere eine von niedrigen bis sehr hohen Werten variabel einstellbare wirksame Oberfläche pro Volumeneinheit besitzt.

Diese Aufgabe wird dadurch gelöst, daß die Füllung aus flexiblen, sich unregelmäßig berührenden und ungeordneten Folienstreifen aus Kunststoff besteht, die zu Bündeln zusammengefaßt und mittig verdrillt und mit der verdrillten Stelle über Tragestäbe gehängt sind.

Die Folienstreifen sind bis zu 8 cm breit und haben eine Dicke von 20 bis 150 μ, vorzugsweise 30 bis 80 μ. Die Streifen haben eine Länge von mehreren Metern, und zwar vorzugsweise eine solche Länge, daß das mittig aufgehängte Bündel von seiner Aufhängung bis in die Nähe des unteren Endes des Tropfkörpers, also bis zur Sohle des Tropfkörpers, reicht. Zu einem Bündel werden je nach Tropfkörperabmessungen oder nach gewünschter Dichte der eingehängten Bündel eine entsprechende Anzahl von Streifen zusammengefaßt und mittig verdrillt, d. h. verdreht. Diese verdrehte Stelle schnürt das Bündel mittig ein, so daß sich ein im wesentlichen oder nahezu rundes Mittelstück ergibt, das darüber hinaus noch gegen entdrillen, also aufgehen durch kleben, heften oder nähen gesichert sein kann. Anstelle einer Verdrillung kann das Bündel in der Mitte auch verflochten, verklebt, verschmolzen oder sonstwie vereinigt sein, so daß sich ein kurzes Teilstück ergibt, mit welchem das Bündel über den Tragstab gehängt wird, so daß jeweils eine Hälfte des Bündels links und rechts vom Tragstab herunterhängt. Die Streifen bestehen vorzugsweise aus einem nicht oder nur äußerst schwer verrottbaren Material, beispielsweise aus Kunststoffen organischer Art, wie Polyäthylen oder Polypropylen, aber auch PVC und dgl. In den Folienstreifen können andere Materialien eingeschlossen sein, beispielsweise Zellulose- oder Glasfasern, wie überhaupt die Streifen Abfallprodukte eines Fertigungsverfahrens sein können, bei dem breitflächige Bahnen eines Kunststoffmaterials kontinuierlich hergestellt werden, die dann später beidseitig besäumt werden, so daß sich Streifen von wenigen Zentimetern Breite in endloser Fertigung ergeben.

Aufgrund einer solchen Herstellung der Füllung bzw. der Streifen für den Tropfkörper können diese im Querschnitt keilförmig oder abgestuft sein. Es hat sich dabei gezeigt, daß gerade die abgestufte oder keilförmige Gestalt im Querschnitt besondere Vorteile hat, weil dadurch der Streifen aufgrund der besonderen Spannung in dem Material ungeordnet und besonders unregelmäßig herabfällt, wenn er aufgehängt ist.

Die Tragstäbe für die Streifen sind ebenfalls aus einem Material, welches gegen Korrosion beständig ist und werden auf die oberen Ränder des Tropfkörpers aufgelegt oder auf besondere Einbauten, die im Tropfkörper angeordnet sind. Sie verlaufen im wesentlichen radial, wenn es sich um einen runden oder polygonalen Tropfkörper handelt, parallel zu den Seitenrändern, wenn es sich um rechteckige oder quadratische Tropfkörper im Grundriß handelt. Der Querschnitt der Tragstäbe kann beliebig sein.

Die Erfindung wird nun anhand von Ausführungsbeispielen, die in der Zeichnung dargestellt sind, näher erläutert. In der Zeichnung stellt dar

Fig. 1 einen Querschnitt durch einen Tropfkörper für die biologische Abwasserreinigung genereller Konstruktion und kreisförmigen Querschnitts,

Fig. 2 eine Anzahl nebeneinanderliegender Streifen für die Füllung des Tropfkörpers,

Fig. 2a eine Anzahl zu einem Bündel zusammengefaßter Streifen für die Füllung mit verdrillter Mitte über einem Tragstab,

Fig. 3 eine Draufsicht auf einen Teil einer Füllung für einen Tropfkörper,

Fig. 4 eine andere Füllung für einen Tropfkörper,

Fig. 5a eine Querschnittsform,

Fig. 5b eine weitere und

Fig. 5c eine noch andere Querschnittsform eines Streifens,

Fig. 6 das obere Ende eines Bündels quer zur Richtung des Tragstabes und

Fig. 7 eine Seitenansicht zweier über einen Tragstab gehängter Bündel.

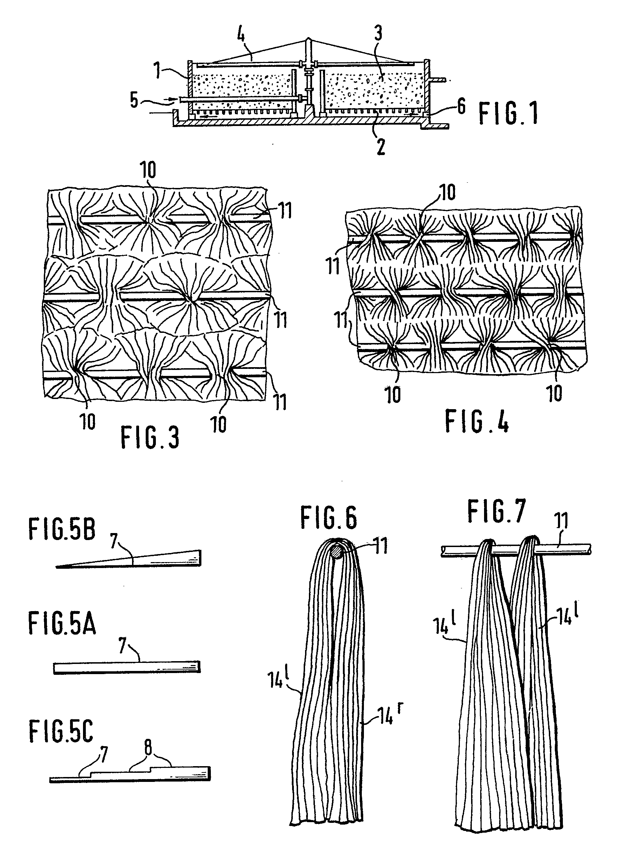

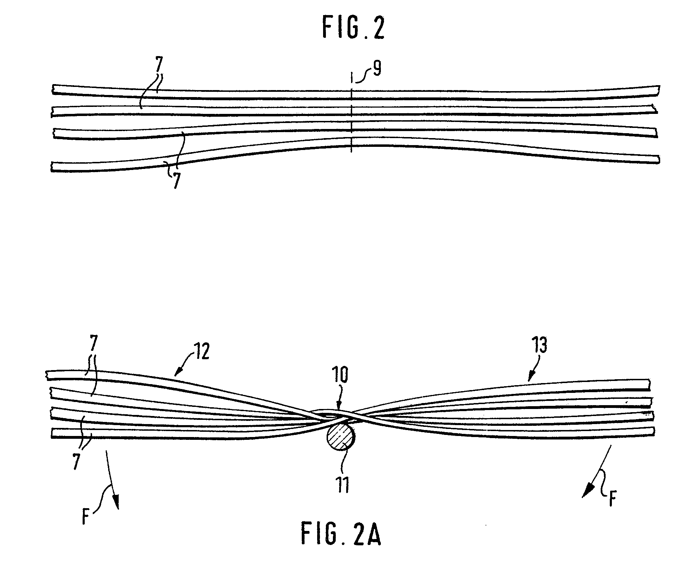

Wie aus Fig. 1 hervorgeht, besteht der Tropfkörper aus einer zylindrischen Wand 1 und einem meistens aus einem aus einzelnen Wasser hindurchlassenden Formsteinen gebildeten Boden 2, auf dem die Füllung 3 des Tropfkörpers liegt bzw. aufgeschüttet ist. Im dargestellten Ausführungsbeispiel handelt es sich um eine grobstückige brockenförmige Schüttung, auf die das Abwasser vermittels eines rotierenden Sprenglers 4 aufgeregnet wird, welches bei 5 zugeführt wird. Bei 6 strömt das biologisch gereinigte Abwasser wieder ab.

Die erfindungsgemäße Füllung des Tropfkörpers nach Fig. 4 besteht nun aus einzelnen Streifen, von denen in Fig. 2 vier nebeneinanderliegend dargestellt sind. Die Streifen tragen das Bezugszeichen 7. Sie haben eine Breite bis zu 8 cm und sind mehrere Meter lang, so daß sie, wenn sie in dem Tropfkörper eingehängt sind, ihn also ausfüllen und bis dicht über seinen Boden reichen.

Die Streifen haben einen rechteckigen Querschnitt, wie in Fig. 5a dargestellt. Gemäß Fig. 5b ist der Streifen keilförmig und gemäß Fig. 5c abgestuft. Letztere abgestufte Gestalt kann sich ergeben, wenn der Streifen als Abfallprodukt einer Produktion eines bahnförmigen Materials vorliegt, welches sich durch Auftragen ein oder mehrerer Schichten eines schmelzflüssigen Kunststoffes auf ein Trägermaterial ergibt. Diese mehreren Schichten erscheinen dann im Querschnitt als Stufen 8.

Solche Streifen von beispielsweise 5 cm Breite und einer Länge von 6 m werden nun zu einem Bündel wie in Fig. 2 gezeigt zusammengefaßt, indem man eine Vielzahl von Streifen, beispielsweise 20 oder 30, vereinigt. Die gestrichelte Linie 9 in Fig. 2 soll die Mitte des Bündels aus den Streifen 7 darstellen, die sich natürlich nun noch weiter nach links und rechts erstrecken. An der Mitte 9 wird das Bündel wie in Fig. 2a gezeigt verdrillt. Diese Verdrillung ist bei 10 gezeigt und bedeutet ein Zusammendrehen der Streifen 7, so daß sich ein strangartiges Gebilde ergibt. Mit einer solchen Verdrillung wird das Bündel zur Füllung des Tropfkörpers gemäß Fig. 1 über einen Tragstab 11 gehängt, der seinerseits wieder mit seinen Enden an geeigneten Stellen im Tropfkörper aufgehängt wird, so daß dann, läßt man die beiden Hälften 12 und 13 (Fig. 2a) los, diese in Richtung der Pfeile F nach unten fallen, so daß sie die in Fig. 6 dargestellte Stellung einnehmen. Auch hier setzen sich die Streifen um ein beträchtliches Stück weiter nach unten fort, um realistische und relative Proportionen zu vermitteln. Es entsteht ein ungeordnetes Herabhängen von streifenförmigen Gebilden, die noch zueinander und in sich selbst aufgrund ihrer Herstellung oder Formgebung verdrillt und verdreht sein können, so daß die Gefahr des flüchtigen Aufeinanderfallens oder -liegens völlig entfällt. Das aus den einzelnen Streifen bestehende Bündel hat die Bezugszeichen 14l und 14r, was links bzw. rechts bedeuten soll. Wenn nun mehrere solcher Bündel 14l und 14r über Tragstäbe 11 gehängt als Füllung für einen Tropfkörper eingesetzt sind, ergeben sich die in Fig. 3 und 4 gezeigten Bilder.

In Fig. 3 bedeutet 11 wieder der Tragstab und 10 die Verdrillung, wobei wegen der Anordnung und Lage der Füllungsbündel nur einige Verdrillungen mit dem Bezugszeichen 10 bezeichnet werden können, um die Abbildung nicht überflüssig zu machen, was auch für Fig. 4 gilt. Es ist jedoch bei einem Vergleich der Fig. 3 und 4 zu sehen, daß in Fig. 4 die Bündel wesentlich dichter beieinanderstehen und enger gepreßt sind als in Fig. 3. Dies soll veranschaulichen die Anpassungsmöglichkeit, die sich aufgrund der erfindungsgemäßen Füllung ergibt, denn ein besonderer Vorteil der erfindungsgemäßen Tropfkörperfüllung ist ihre Variabilität. Bei der Verwendung einer Füllung gemäß Fig. 3 erhält man eine relativ niedrige wirksame Oberfläche, während bei einer Füllung gemäß Fig. 4 eine hohe wirksame Oberfläche erhalten wird, was sich jeweils nach der Art des Abwassers, nach dem Tropfkörper und sonstigen Bedingungen richten kann.

Insbesondere in der Einfahrphase eines mit einer solchen Füllung ausgerüsteten Tropfkörpers besteht die Möglichkeit, durch Zusammenschieben oder Auseinanderziehen der Streifenbündel die wirksame Oberfläche jeweils auf das anfallende Wasser einzustellen. Bei den Fig. 3 und 4 ist hier die Veränderung der wirksamen Oberfläche um den Faktor 2 demonstriert. Die beiden Figuren sind nach Fotografien angefertigt. Fig. 4 enthält die doppelte Füllung und damit die doppelte wirksame Oberfläche wie die der Fig. 3. Besonders unkompliziert und einfach ist auch bei der streifenförmigen Füllung die Reinigung der Streifen, was von oben vom Tropfkörper aus geschehen kann, um sie vom Eigenbewuchs und sonstigen abgelagerten Stoffen zu befreien. Dies kann dadurch beispielsweise geschehen, daß man mit einer Stange zwischen die aufgehängten Bündel fährt, hin- und herbewegt und so mechanisch den Bewuchs und die Ablagerung zum Herabfallen bringt, worauf der Tropfkörper gespült wird.

**Patentansprüche**

1. Füllung für einen Tropfkörper für die biologische Abwasserreinigung in hängender Anordnung, dadurch gekennzeichnet, daß die Füllung aus flexiblen, sich unregelmäßig berührenden und ungeordneten Folienstreifen (7) aus Kunststoff besteht, die zu Bündeln zusammengefaßt und mittig verdrillt (10) und mit der verdrillten Stelle (10) über Tragstäbe (11) gehängt sind.

2. Füllung nach Anspruch 1, dadurch gekennzeichnet, daß die Folienstreifen (7) bis zu 8 cm breit sind und eine Dicke von 20 bis 150 µ, vorzugsweise 30 bis 80 µ haben.

3. Füllung nach Anspruch 1 und 2, dadurch gekennzeichnet, daß die Streifen eine Länge von mehreren Metern haben und im Querschnitt rechteckige keilförmige oder abgestuft keilförmige Gestalt aufweisen.

4. Füllung nach Anspruch 1 bis 3, dadurch gekennzeichnet, daß die Streifen Randabschnittstreifen aus einer Produktion eines kontinuierlich hergestellten bahnförmigen Materials sind.

5. Füllung nach Anspruch 1 bis 4, dadurch gekennzeichnet, daß die Streifen aus einem thermoplastischen Kunststoff bestehen, der aus einzelnen Auftragsschichten aufgebaut ist.

6. Füllung nach Anspruch 1 bis 5, dadurch gekennzeichnet, daß die verdrillte Stelle (10) der Streifen (7) durch Zusammenbinden oder Zusammenschweißen der Streifen oder durch Verflechten der Streifen gebildet ist.

**Claims**

1. Filling of percolating filters for biological waste water purification in suspended arrangement, characterized in that the filling consists of flexible foil strips (7) of plastics material, touching one another irregularly and randomly arranged, which are combined into bundles and centrally twisted (10) and are suspended at the twist position (10) over support bars (11).

2. Filling according to Claim 1, characterized in that the foil strips (7) are up to 8 cm wide and have a thickness of 20 to 150 µ, preferably 30 to 80 µ.

3. Filling according to claims 1 and 2, characterized in that the strips have a length of several metres and possess, in cross-section, a rectangular, wedge-shaped or stepped wedge-shaped form.

4. Filling according to claims 1 to 3, characterized in that the strips are edge cuttings from a production of a continuously manufactured material in sheet form.

5. Filling according to claims 1 to 4, characterized in that the strips are of a thermoplastics material, which is built up from individual applied coatings.

6. Filling according to claims 1 to 5, characterized in that the twist position (10) of the strips (7) is formed by tying or sealing (welding) the strips together or by plaiting the strips.

**Revendications**

1. Matière de remplissage pour un percolateur ou corps d'égouttage destiné à la purification biologique d'eaux résiduaires, à disposition pendante, caractérisée en ce que la matière de remplissage est constituée de bandes de feuilles (7) en matière plastique, qui sont agencées et se touchent de manière irrégulière, qui sont rassemblées en faisceaux et torsadées (10) au milieu et qui pendent par l'endroit torsadé (10) sur des barreaux de support (11).

2. Matière de remplissage suivant la revendication 1, caractérisée en ce que les bandes en feuilles (7) ont une largeur qui va jusqu'à 8 cm et possèdent une épaisseur de 20 à 150 µ, de préférence 30 à 80 µ.

3. Matière de remplissage suivant l'une quelconque des revendications 1 et 2, caractérisée en ce que les bandes ont une longueur de plusieurs mètres et présentent, en section transversale, un aspect cunéiforme à angles droits ou cunéiforme échelonné.

4. Matière de remplissage suivant l'une quelconque des revendications 1 à 3, caractérisée en ce que les bandes sont constituées de chutes de découpe des bords provenant de la production d'une matière fabriquée de manière continue en forme de nappe.

5. Matière de remplissage suivant l'une quelconque des revendications 1 à 4, caractérisée en ce que les bandes se composent d'une matière thermoplastique qui est réalisée à partir de couches individuelles superposées.

6. Matière de remplissage suivant l'une quelconque des revendications 1 à 5, caractérisée en ce que l'endroit torsadé (10) des bandes (7) est formé par liaison mutuelle ou soudure mutuelle des bandes ou par tressage ou entrelaçage des bandes.

FIG.1

FIG.3

FIG.4

FIG.5B

FIG.5A

FIG.5C

FIG.6

FIG.7

# FIG.2

# FIG.2A